# EUROPEAN PATENT SPECIFICATION

(11) **EP 3 390 252 B1**
(45) Date of publication and mention of the grant of the patent: **06.10.2021**
(21) Application number: 16810365.3
(22) Date of filing: 14.12.2016
(51) Int. Cl.: B65G 65/02, B65G 67/20

(54) **PLANT AND METHOD FOR THE AUTOMATIC LOADING OF A CONTAINER**
ANLAGE UND VERFAHREN ZUM AUTOMATISCHEN BELADEN EINES BEHÄLTERS
SYSTÈME ET PROCÉDÉ POUR LE CHARGEMENT AUTOMATIQUE D'UN CONTENEUR

(30) Priority: 14.12.2015 DK 201570822
(43) Date of publication of application: 24.10.2018
(73) Proprietor: FLSmidth A/S, 2500 Valby (DK)
(72) Inventor: BRIOSCHI, Sergio, 20050 Sulbiate (IT)
(86) International application number: PCT/EP2016/080866
(87) International publication number: WO 2017/102771

(56) References cited:
- EP-A1- 0 029 817
- EP-A1- 2 716 591
- WO-A1-2007/071831
- WO-A1-2014/206418

## Description

### TECHNICAL FIELD

The present invention relates to a plant and to a method for the automatic loading of a container with palletized merchandise/goods.

In particular, the present invention finds its application in the automatic loading of pallets (or ordered stacks) of sacks in a container. The invention can, however, refer to the loading of other materials palletized or arranged in ordered piles.

The containers are completely closed and have only one rear opening, therefore it can be deduced that the filling thereof is quite problematic having little space for inserting the load.

In the following, reference will be made to a container, but the invention also applies to trucks opened only at the rear.

EP 0 029 817 A1 discloses a device for loading freight units into a freight container comprising a carriage movable along a first direction and having an upper loading plane formed by conveyor rollers, a beam arranged slidable in a guide along a second direction perpendicular to the first direction, a seizing apparatus having a fork with prongs being associated to an end of the beam. The carriage is movable from a first position for receiving a freight unit on the loading plane to a second position in a loading station between the open end of the container and the end of the bean and where the loading plane is located at a lower level than the fork in order to allow the prongs of the fork to be inserted in the room of a pallet. EP 0 029 817 A1 further discloses a method for the automatic loading of a container with pallets of sacks comprising the steps of: providing pallets of sacks to at least one movable carriage along a first direction; placing a guide aligned with said container; a beam being slidable inside said guide along a second direction perpendicular to said first direction; arrange a seizing apparatus, having prongs, associated to one end of said beam; moving said movable carriage from a first position for receiving said pallets of sacks to a second position where the seizing apparatus can insert the fork in the room of the pallet.

WO 2014/206418 A1 discloses a plant for loading a compartment of a road transport vehicle with stacks of sacks comprising a parking area, a carriage movable from a loading to a pick-up position and having an upper chain conveyor defining a support surface. Additionally, the plant comprises a handling member comprising a wagon movable along a pair of tracks arranged above the parking area and a fork movable along an upright of the wagon. In the pick-up position the carriage is located in front the rear opening of the compartment of the vehicle and the fork of the handling member is moved to a position on the opposite side of the carriage. Then the prongs of the fork are moved into the interspaces of the conveyor and the stack of sacks lifted off the carriage. Thereafter the stack of sacks can be moved to the desired position of compartment.

### SUMMARY OF THE INVENTION

The object of the present invention is to provide a plant, for the automatic loading of a container with pallet of sacks, having dimensions compatible with the container.

According to the present invention, these and further objects are achieved by a plant for the automatic loading of a container with ordered stacks of sacks comprising: at least one movable carriage movable along a first direction; said movable carriage having a plurality of first prongs placed cantilevered; a guide aligned with said container; a beam sliding inside said guide along a second direction perpendicular to said first direction; a seizing apparatus, having second prongs, associated to one end of said beam; said second prongs being insertable with said first prongs; said at least one movable carriage being movable from a first position for receiving said ordered stacks of sacks on said first prongs, to a second position where said first prongs are located above said second prongs; said second prongs being vertically movable; said beam being longitudinally movable to enter inside said container.

Said objects are also achieved by a method for the automatic loading of a container with pallets of sacks comprising the steps of: providing at least one movable carriage movable along a first direction with the pallet of sacks; said movable carriage having a plurality of first prongs placed cantilevered; arranging a guide aligned with said container; a beam being slidable inside said guide along a second direction perpendicular to said first direction; arranging a seizing apparatus, having second prongs, associated to one end of said beam; said second prongs being insertable with said first prongs; moving said movable carriage from a first position for receiving said pallets of sacks on said first prongs, to a second position where said first prongs are located on the top of said seizing apparatus; move vertically said seizing apparatus; move longitudinally said beam to enter inside said container.

Further characteristics of the invention are described in the dependent claims.

The advantages of this solution with respect to the solutions of the known art are various.

This solution allows to automatically load the container or other carriers that are completely closed and have only one rear opening that can be opened.

It allows not to rest on the floor of the container and has enough clearance to be able to load without interfering with the container itself.

The arrangement of the carriages, transversal with respect to the beam, their conformation allowing the loading and the withdrawal of the stacks of sacks by means of the fork, allows to position the beam as close as possible to the container thereby minimizing mechanical stress thereon while also reducing its length, in particular the cantilevered portion. Thanks also to the support system of the beam, which is retractable.

Furthermore the guide is fastened by means of a pair of supports and of a pair of pins to avoid hyperstatic loads in the structure.

### BRIEF DESCRIPTION OF DRAWINGS

The characteristics and advantages of the present invention will become apparent from the following detailed description of an embodiment thereof, illustrated by way of nonlimiting example in the accompanying drawings, wherein:

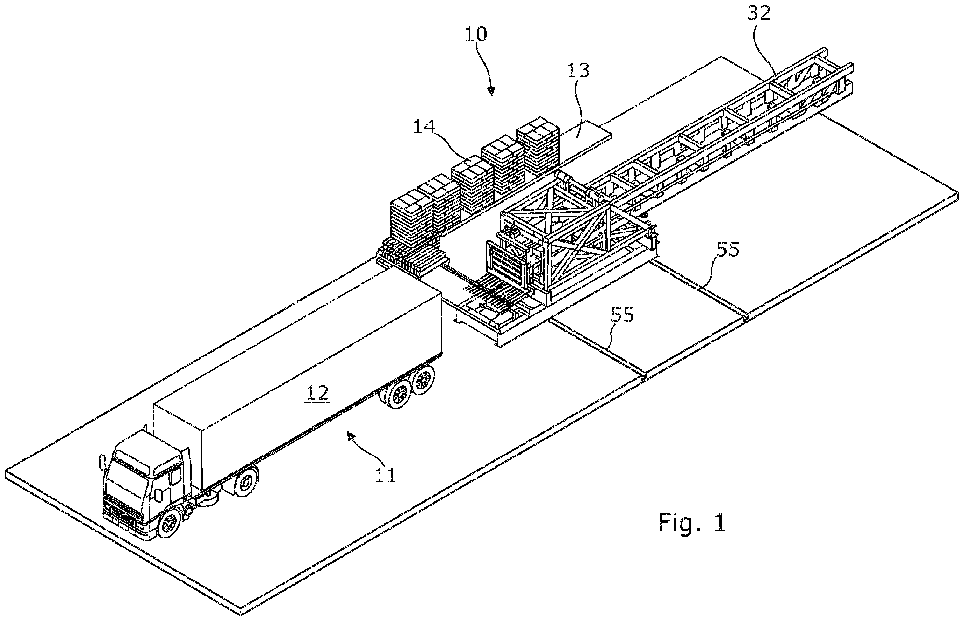

Figure 1 shows a plant for the automatic loading of a container, comprising the container, seen in axonometric view, according to the present invention;

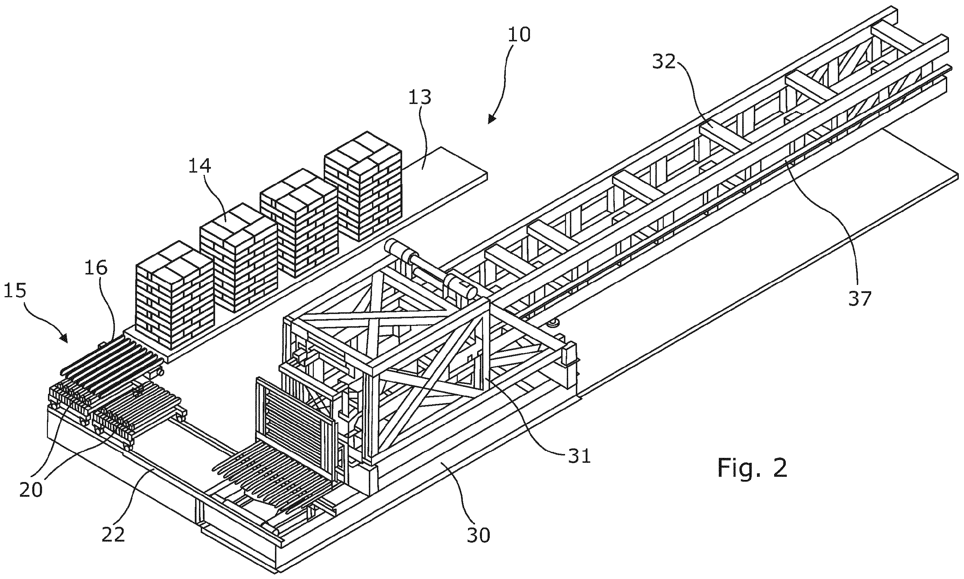

Figure 2 shows a plant for the automatic loading of a container, seen in axonometric view, according to the present invention;

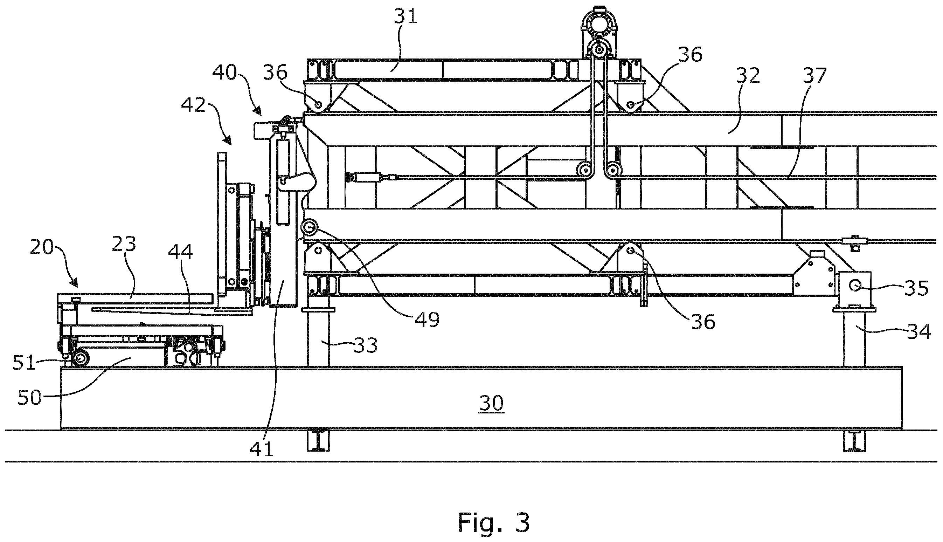

Figure 3 shows the lateral section of a central portion of a plant for the automatic loading of a container, according to the present invention;

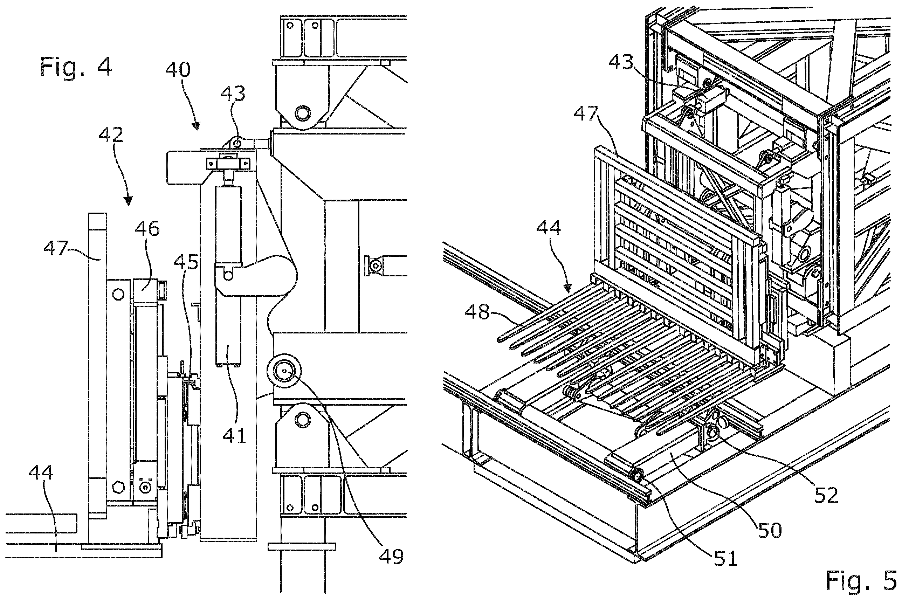

Figure 4 shows the seizing and storage equipment of a plant for the automatic loading of a container, seen from the side, according to the present invention;
Figure 5 shows the seizing and storage equipment of a plant for the automatic loading of a container, seen in axonometric view, according to the present invention;

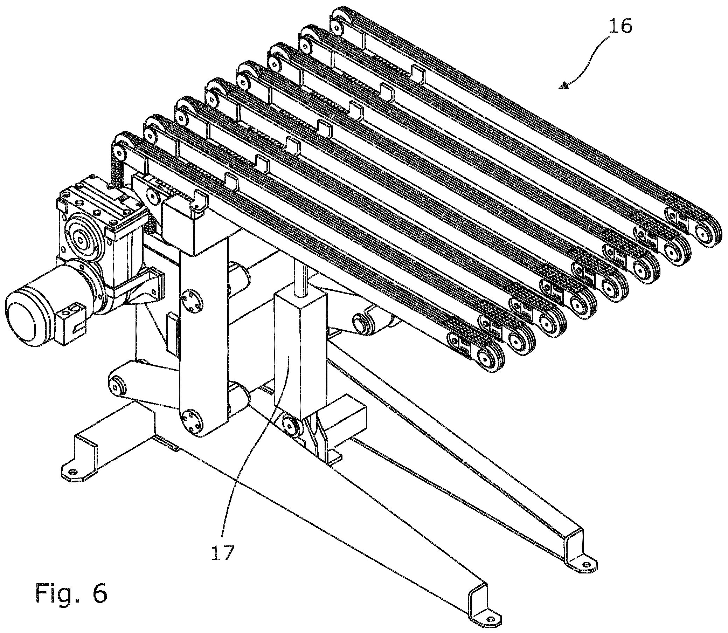

Figure 6 shows a multiple chain conveyor of a plant for the automatic loading of a container, seen in axonometric view, according to the present invention;
Figures 7-19 show the sequence for loading a container, according to the present invention.

### DETAILED DESCRIPTION

A plant 10 for the automatic loading of a container, according to the present invention, comprises a park area 11, where the container 12 to be loaded is arranged, preferably mounted on a vehicle. The container 12 is completely closed on all sides and has only one access, closable with doors, in the rear part thereof.

A conveyor 13, preferably of the belt type, transports the pallet of sacks 14 laterally to the park area.

Near the park area, the plant 10 comprises a double conveyor 15 for transporting the pallets of sacks 14 from the conveyor 13 towards the container 12.

In particular, the conveyor 15 is movable from a loading position at the conveyor 13 to a seizing position located behind the container 12.

The conveyor 13 feeds a multiple chain conveyor 16, whose branches are placed cantilevered, and which can be lifted and lowered by means of a hydraulic actuator 17. The conveyor chains 16 are supported and moved by the hydraulic actuator 17.

The conveyor 15 is formed by two movable carriages 20 sliding on rails 22 and joined together by a system that allows moving the latter near or apart. The direction of the rails 22 is perpendicular to the direction of the conveyor 13 and also perpendicular to the long side of the container 12.

The movable carriages 20 comprise at the top a plurality of prongs 23 spaced apart so that the chains of the conveyor 16 can be inserted between the same.

The prongs 23 are also cantilevered, i.e. are borne only by a vertical structure, belonging to the movable carriages 20, placed at the side near the container 12.

The height of the movable carriages 20 is shorter (about 20 cm) than the height of the conveyor 13.

At the rear of the park area and consequently at the rear of the container 12 a base 30 is provided carrying a guide 31. The guide 31 is constituted by a portion of a Long type truss.

A Vierendeel-type beam 32 can slide inside the guide 31.

The guide 31 at the front rests on two supports 33 near the container 12 and is fixed by means of a pin 35 on two rear supports 34. The supports 33 and 34 are part of the base 30.

The guide 31 is formed by beams joined together and having towards the inside a plurality of upper and lower wheels 36, on which the beam 32 can slide.

The beam 32 can slide horizontally inside the guide 31 by the actuation of a pair of chains 37 placed on the side of the beam 32.

At the front, in the vicinity of the container 12, the beam 32 supports a structure 40, which comprises a pair of vertical lifters 41 that can vertically lift the portion 42, of the structure 40, fixed in front of the same (40).

The lifter 41 also comprises actuators 43 to tilt forward by few degrees the lifter 41 and the portion 42 rotating around the pin 49.

The portion 42 supports a horizontal seizing apparatus 44, commonly called fork, having a plurality of prongs 48.

The portion 42 also comprises a pantograph structure 46 extending on command, connected to a panel 47. The pantograph 46 is arranged above the fork 44. In the base 30, between the guide 31 and the container 12 a support system 50 of the beam 32 is located. In the rest position, while the pallets of sacks 14 are loaded on the fork 44, the support system 50 remains horizontal to not interfere with the operations that take place above it.

When the beam 32 begins to enter inside the container 12, the support system 50 is lifted, being possible for the latter to rotate about a pin 51, placed close to the container 12. At the ends of the support system 50 wheels 52 are placed on which the beam 32 can rest and slide.

The plant for the loading of a container is automatic so all the means used are motorized and controlled by a computerized control center with the use of several sensors. Said elements will not be described in detail since, after the reading of this document, a person skilled in the art is able to manufacture the same.

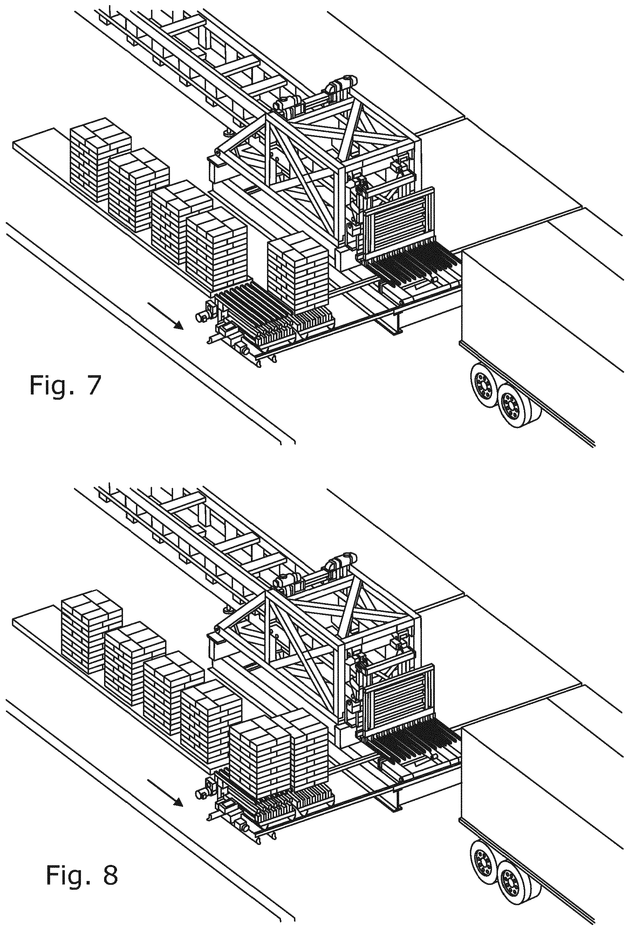

The operation of the invention is apparent for the skilled in the art from what has been described and, in particular, is the following:
The pallets of the sacks 14 arrive in succession from the conveyor 13 (Figure 7) and reach the conveyor belt 16 that is initially aligned and at the same height of the conveyor 13. The pallets of sacks 14 may or may not have the underlying pallet.
The chains of the conveyor 16 are lowered on the underlying first movable carriage 20, pass through the prongs 23, and the pallet of sacks 14 is laid upon it.
The first movable carriage 20 moves towards the fork 44 so that the second carriage 20 is aligned with the conveyor 16 (Figure 7).
Then the chains of the conveyor 16, which remained below the prongs 23, are lifted and are positioned back at the height of the conveyor 13 so as to receive the new pallet of sacks 14 (Figure 8).

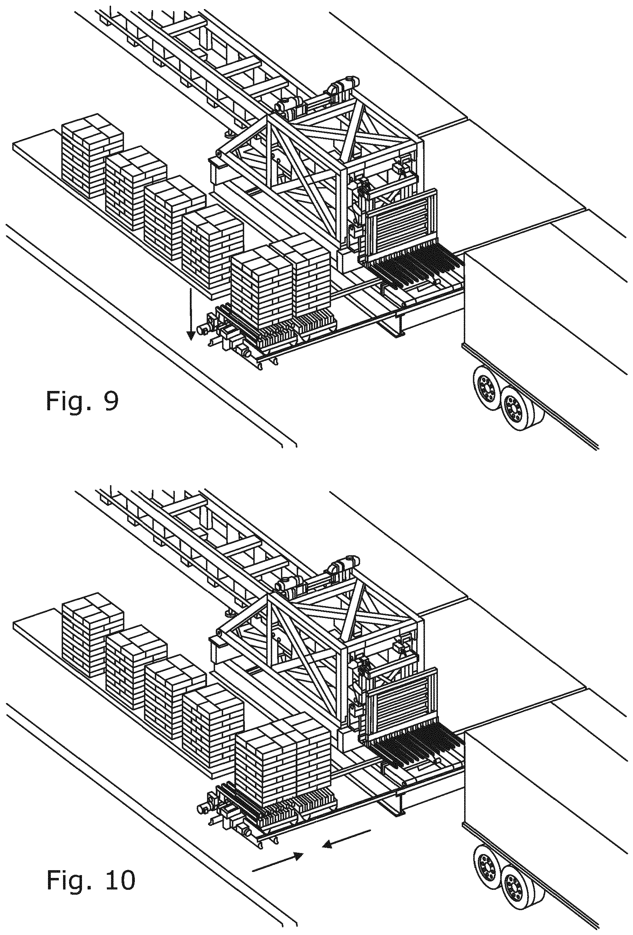

Also in this case, once the pallet of sacks 14 has arrived on the chains of the conveyor 16, they are lowered (Figure 9) positioning the second pallet of sacks 14 on the second movable carriage 20.

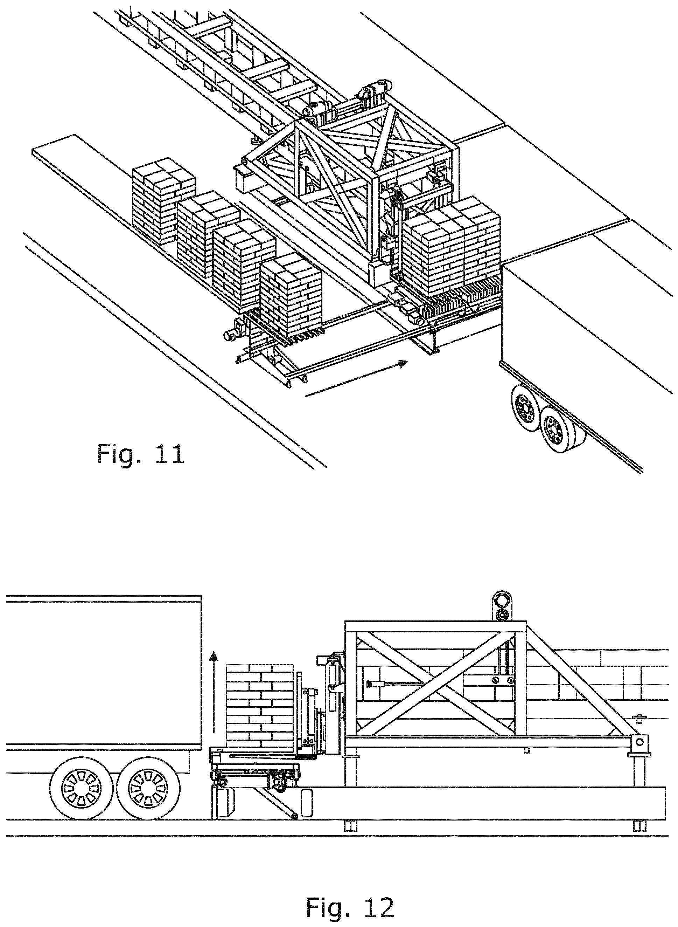

The second carriage 20 approaches the first carriage 20 (Figure 10) so that the pallet of sacks 14 are arranged side by side. Both move and align themselves to the fork 44, (Figure 11 and 12) which in the meantime was positioned lower than the prongs 23 so as not to interfere with the arriving carriages 20. The fork 44 is as wide as the two pallets of sacks 14 side by side.

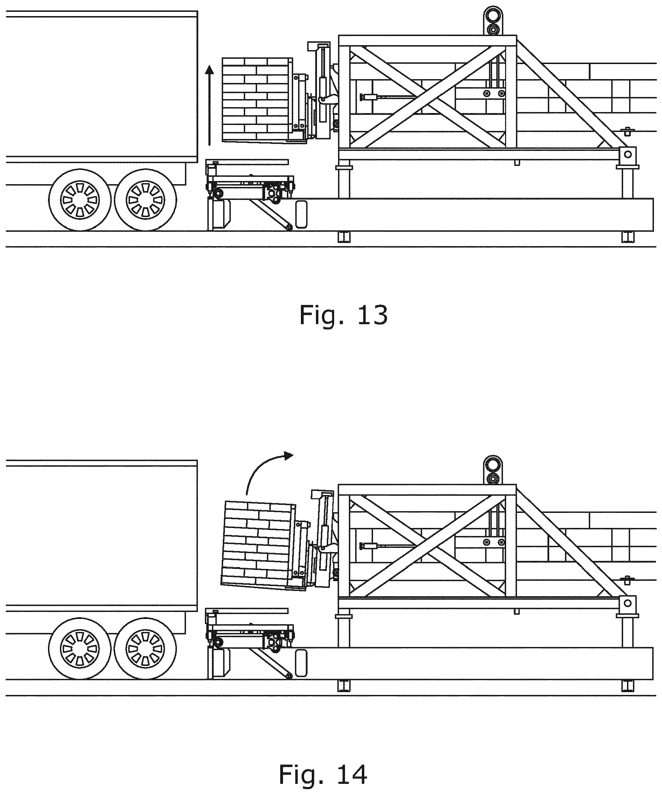

The lifter 41 lifts the structure 40 (Figure 12) and in particular the prongs of the fork 44 pass through the prongs 23 of the carriages 20. The lifters 41 are inclined by a few degrees (for example approximately 3°) (Figure 14), so as to lift the tip of the fork 44 and better hold the pallet of sacks 14.

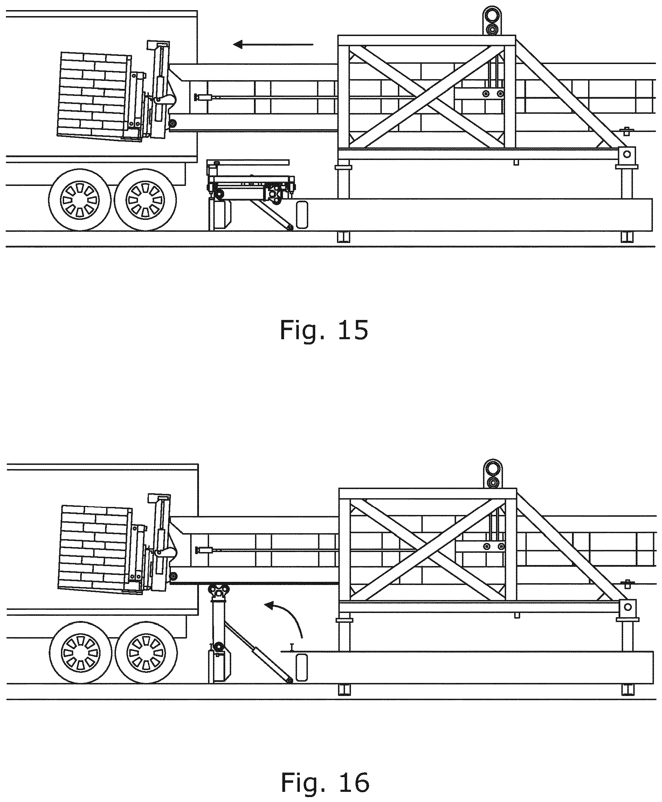

The beam 32 is advanced (Figure 15), along the guide 31, bringing the fork 44 inside the container 12.

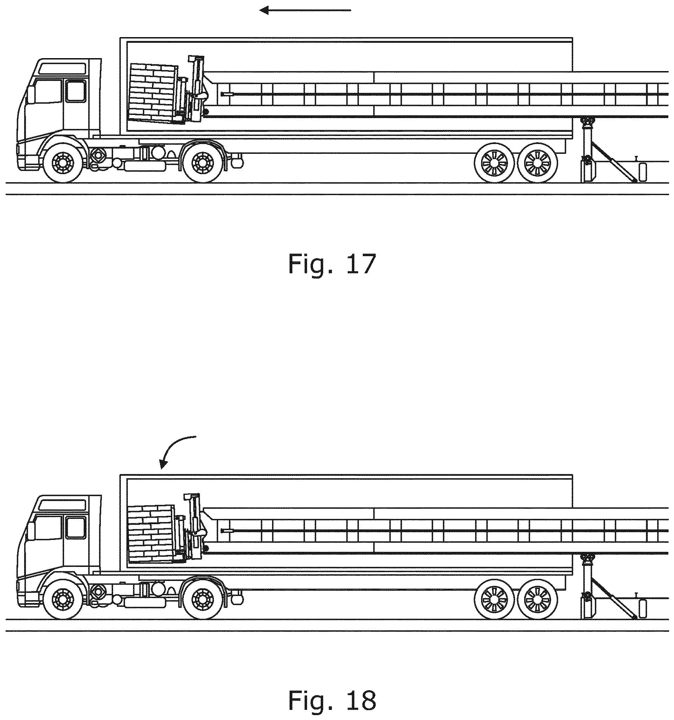

As soon as the beam 32 enters the container 12, the support system 50 is lifted (Figure 16) and the beam 32 rests on the wheels 52 and moves forward until being positioned at the point (Figure 17) in which the stack of sacks 14 must be unloaded.

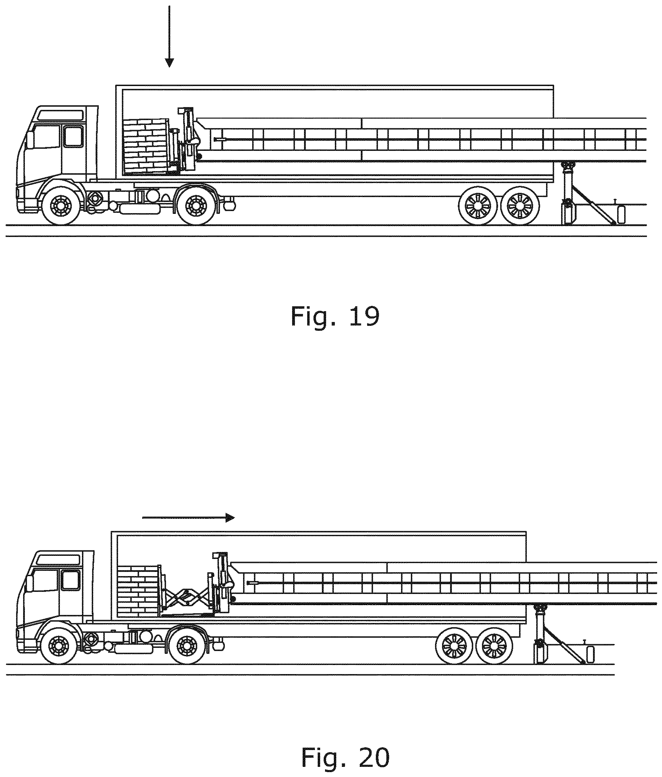

The lifter 41 is inclined downward (Figure 18) and the fork 44 returns to the starting position. The fork 44 is lowered (Figure 19) to be positioned on (or close to) the floor of the container 12.

To unload the pallet of sacks on 14 the floor of the container 12, the pantograph 46 extends (Figure 20) positioning the second panel 47 against the pallet of sacks 14, and at the same time the beam 32 is retracted at the same speed, so that the pallet of sacks 14 remains in the desired position, unloading from the fork 44.

The beam 32, with the fork 44, exits from the container, the pantograph is closed, the support system 50 is lowered and seizes the load of pallets of sacks on the fork 44.

The fact that the fork 44, and the beam 32 which supports it, do not rest in any way on the loading floor of the container 12 allows that the loading of the same takes place without any concern about the state of the container 12. In fact, loading equipment that rests on the floor of the container could create problems if the latter is not in good condition.

The loading of the pallet of sacks 14 coming from the side with respect to the beam 32 and at the prongs 48 allows the fork 44 to be as close as possible to the container 12, and therefore decrease the cantilevered length of the beam 32.

The arrangement in height of the conveyor 16, of the movable carriages 20 and of the fork 44 allows the lateral sliding of the same (20) without interference. The fact that the prongs 23, cantilevered, of the movable carriages 20, are insertable with the chains of the conveyor 16, as well as with the prongs of the fork 44, allows vertical movement.

The positioning of the support system 50, of the beam 32, as close as possible to the container 12 allows the beam to extend inside the container 12 with greater ease. The guide 31 is supported by two front supports 33 (towards the container 12) and by means of a pair of pins 35, placed on the rear supports 34, in order not to create a constraint to the rotation about the pin to avoid hyperstatic and non-immediately quantifiable reactions during the extension of the beam 32 when resting on the support 50.

The vehicle carrying the container 12 must arrive at the park area 11 in reverse, and to obtain a correct alignment with the fork 44, it is provided that the front portion 42 of the structure 40 can move sideways sliding along guides 45.

In addition to facilitating the parking of the vehicle carrying the container 12 in the loading position, it can be provided that the entire base 30, with the guide 31, the beam 32 and the structure 40, can move sideways by a few meters sliding along rails 55 so that the arriving vehicle can pass between the base 30 and the conveyor 16 facing forward.

Once the vehicle is positioned in the park area the base 30 returns to the loading position behind the opening of the container 12.

In an alternative embodiment one can plan to use one carriage only 20 (instead of two) and consequently to have a fork 44 of reduced size, to load one pallet of sacks 14 at a time.

The size of the plant, which in one embodiment has a beam 32 comprising the fork 44 of length 18 m, with sides of 1.25 m and 1.5 m, a weight of 8 t and a fork 2 m wide and 1.2 m long, may be any according to requirements and the state of the art.

A more robust structure than that set forth above could also be used and avoid the use of the support system 50.

In the case of the presence of pallets carrying the sacks 14, the fork would have a different shape and comprising only four prongs to support the two pallets. In this case it would not be necessary the pantograph to release the sacks as just retracting the fork from the pallets would be needed.

## Claims

1. A plant for the automatic loading of a container with ordered stacks of sacks (14) comprising: at least one movable carriage (20) along a first direction; said movable carriage (20) having a plurality of first prongs (23) placed cantilevered; a guide (31) aligned with said container (12); a beam (32) sliding inside said guide (31) along a second direction perpendicular to said first direction; a seizing apparatus (44), having second prongs (48), associated to one end of said beam (32); said second prongs (48) being insertable with said first prongs (23); said at least one movable carriage (20) being movable from a first position for receiving said ordered stacks of sacks (14) on said first prongs (23), to a second position where said first prongs (23) are located above said second prongs (48); said second prongs (48) being vertically movable; said beam (32) being longitudinally movable to enter inside said container (12).

2. The plant according to claim 1 **characterized by** comprising a support system (50) of said beam (32), placed next to said container (12), liftable and supporting said beam (32) when the latter enters inside said container (12).

3. The plant according to one of the preceding claims, **characterized in that** said seizing apparatus (44) is associated with one end of said beam (32) by means of a pantograph (46) extendable and retractable on command.

4. The plant according to one of the preceding claims, **characterized in that** said seizing apparatus (44) is tiltable.

5. The plant according to one of the preceding claims, **characterized in that** said guide (31) is a portion of truss with upper and lower wheels (36), in contact on the inside of said beam (32).

6. The plant according to one of the preceding claims **characterized by** comprising a conveyor (13) that provides ordered stacks of sacks (14) to said at least one carriage (20).

7. The plant according to claim 6 **characterized by** comprising a chain conveyor (16) placed cantilevered at the end of said conveyor (13); said chains being insertable with said first prongs (23).

8. The plant according to one of the preceding claims **characterized by** comprising two movable carriages (20).

9. The plant according to one of the preceding claims **characterized by** comprising a base (30) bearing said guide (31); said base being movable along said first direction.

10. The plant according to one of the preceding claims, **characterized in that** the width of said seizing apparatus (44) is substantially equal to the width of said two carriages (20).

11. The plant according to one of the preceding claims, **characterized in that** said guide (31) is located in front on two supports (33) and is fixed by means of a pin (35) on two rear supports (34).

12. A method for the automatic loading of a container with pallets of sacks comprising the steps of: providing pallets of sacks to at least one movable carriage (20) along a first direction; said movable carriage (20) having a plurality of first prongs (23) placed cantilevered; placing a guide (31) aligned with said container (12); a beam (32) being slidable inside said guide (31) along a second direction perpendicular to said first direction; arrange a seizing apparatus (44), having second prongs (48), associated to one end of said beam (32); said second prongs (48) being insertable with said first prongs (23); moving said movable carriage (20) from a first position for receiving said pallets of sacks on said first prongs (23), to a second position where said first prongs are located on the top of said seizing apparatus (44); vertically moving said seizing apparatus (44); longitudinally moving said beam (32) to enter inside said container (12).

13. The method according to the preceding claim **characterized by** further comprising the step of lifting a support system (50) of said beam (32), placed next to said container (12), when the latter enters inside said container (12).

## Patentansprüche

1. Anlage für das automatische Beladen eines Behälters mit geordneten Stapeln mit Säcken (14), die umfasst: mindestens einen Wagen (20), der entlang einer ersten Richtung bewegbar ist; wobei der bewegbare Wagen (20) eine Vielzahl erster Zinken (23) aufweist, die auskragend platziert sind; eine Führung (31), die mit dem Behälter (12) ausgerichtet ist; einen Balken (32) der innerhalb der Führung (31) entlang einer zweiten Richtung senkrecht zu der ersten Richtung gleitet; eine Greifeinrichtung (44), die zweite Zinken (48) aufweist, die mit einem Ende des Balkens (32) assoziiert sind; wobei die zweiten Zinken (48) in die ersten Zinken (23) einsetzbar sind; wobei der mindestens eine bewegbare Wagen (20) von einer ersten Position zum Aufnehmen des geordneten Stapels mit Säcken (14) auf den ersten Zinken (23) zu einer zweiten Position, wo die ersten Zinken (23) oberhalb der zweiten Zinken (48) liegen, bewegbar ist; wobei die zweiten Zinken (48) vertikal bewegbar sind; wobei der Balken (32) längs bewegbar ist, um in den Behälter (12) einzutreten.

2. Anlage nach Anspruch 1, **dadurch gekennzeichnet, dass** sie ein Tragsystem (50) des Balkens (32), das neben dem Behälter (12) platziert ist, aufweist, das anhebbar ist und den Balken (32) trägt, wenn Letzterer in den Behälter (12) eintritt.

3. Anlage nach einem der vorstehenden Ansprüche, **dadurch gekennzeichnet, dass** die Greifeinrichtung (44) mit einem Ende des Balkens (32) mittels eines Pantografen (46), der auf Befehl ausfahrbar und einziehbar ist, assoziiert ist.

4. Anlage nach einem der vorstehenden Ansprüche, **dadurch gekennzeichnet, dass** die Greifeinrichtung (44) kippbar ist.

5. Anlage nach einem der vorstehenden Ansprüche, **dadurch gekennzeichnet, dass** die Führung (31) ein Abschnitt eines Abstützbocks mit oberen und unteren Rädern (36), die auf der Innenseite des Balkens (32) in Berührung sind, ist.

6. Anlage nach einem der vorstehenden Ansprüche, **dadurch gekennzeichnet, dass** sie einen Förderer (13) umfasst, der geordnete Stapel mit Säcken (14) zu dem mindestens einen Wagen (20) bereitstellt.

7. Anlage nach Anspruch 6, **dadurch gekennzeichnet, dass** sie einen Kettenförderer (16) umfasst, der auskragend an dem Ende des Förderers (13) platziert ist, wobei die ersten Zinken (23) in die Ketten einfügbar sind.

8. Anlage nach einem der vorstehenden Ansprüche, **dadurch gekennzeichnet, dass** sie zwei bewegbare Wagen (20) umfasst.

9. Anlage nach einem der vorstehenden Ansprüche, **dadurch gekennzeichnet, dass** sie eine Basis (30), die die Führung (31) trägt, umfasst; wobei die Basis entlang der ersten Richtung bewegbar ist.

10. Anlage nach einem der vorstehenden Ansprüche, **dadurch gekennzeichnet, dass** die Breite der Greifeinrichtung (44) im Wesentlichen gleich der Breite der zwei Wagen (20) ist.

11. Anlage nach einem der vorstehenden Ansprüche, **dadurch gekennzeichnet, dass** die Führung (31) vorn auf zwei Trägern (33) liegt und mittels eines Stifts (35) auf zwei hinteren Trägern (34) befestigt ist.

12. Verfahren für das automatische Beladen eines Behälters mit Paletten mit Säcken, das die Schritte aufweist des: Bereitstellens von Paletten mit Säcken zu mindestens einem Wagen (20), der entlang einer ersten Richtung bewegbar ist; wobei der bewegbare Wagen (20) eine Vielzahl erster Zinken (23) aufweist, die auskragend platziert sind; Platzieren einer Führung (31), die mit dem Behälter (12) ausgerichtet ist; wobei ein Balken (32) innerhalb der Führung (31) entlang einer zweiten Richtung senkrecht zu der ersten Richtung gleitbar ist; Einrichtens einer Greifeinrichtung (44), die zweite Zinken (48) aufweist, die mit einem Ende des Balkens (32) assoziiert sind; wobei die zweiten Zinken (48) in die ersten Zinken (23) einfügbar sind; Bewegens des bewegbaren Wagens (20) von einer ersten Position zum Aufnehmen der Paletten mit Säcken auf den ersten Zinken (23) zu einer zweiten Position, wo die ersten Zinken auf der Oberseite der Greifeinrichtung (44) liegen; vertikalen Bewegens der Greifeinrichtung (44); Längsbewegens des Balkens (32), um in den Behälter (12) einzutreten.

13. Verfahren nach dem vorstehenden Anspruch, weiter **gekennzeichnet dadurch, dass** es den Schritt des Anhebens eines Tragsystems (50) des Balkens (32), das neben dem Behälter (12) platziert ist, wenn Letzterer in den Behälter (12) eintritt, umfasst.

## Revendications

1. Installation pour le chargement automatique d'un conteneur avec des empilements ordonnés de sacs (14), comprenant : au moins un chariot mobile (20) dans une première direction ; ledit chariot mobile (20) ayant une pluralité de premières dents (23) disposées en porte-à-faux ; un guide (31) aligné avec ledit conteneur (12) ; une poutre (32) coulissant à l'intérieur dudit guide (31) dans une seconde direction perpendiculaire à ladite première direction ; un appareil de saisie (44), ayant des secondes dents (48), associé à une extrémité de ladite poutre (32) ; lesdites secondes dents (48) pouvant être insérées entre lesdites premières dents (23) ; ledit au moins un chariot mobile (20) étant mobile d'une première position permettant de recevoir lesdits empilements ordonnés de sacs (14) sur lesdites premières dents (23) jusqu'à une seconde position dans laquelle lesdites premières dents (23) sont disposées au-dessus desdites secondes dents (48) ; lesdites secondes dents (48) étant mobiles verticalement ; ladite poutre (32) étant mobile longitudinalement de façon à entrer à l'intérieur dudit conteneur (12).

2. Installation selon la revendication 1, **caractérisée en ce qu'**elle comprend un système de support (50) de ladite poutre (32), placé à côté dudit conteneur (12), levable et supportant ladite poutre (32) lorsque cette dernière entre à l'intérieur dudit conteneur (12).

3. Installation selon l'une des revendications précédentes, **caractérisée en ce que** ledit appareil de saisie (44) est associé à une extrémité de ladite poutre (32) au moyen d'un pantographe (46) extensible et rétractable sur commande.

4. Installation selon l'une des revendications précédentes, **caractérisée en ce que** ledit appareil de saisie (44) est inclinable.

5. Installation selon l'une des revendications précédentes, **caractérisée en ce que** ledit guide (31) est une partie d'une structure en treillis pourvue de galets supérieurs et inférieurs (36), en contact sur l'intérieur de ladite poutre (32).

6. Installation selon l'une des revendications précédentes, **caractérisée en ce qu'**elle comprend un convoyeur (13) qui délivre des empilements ordonnés de sacs (14) sur ledit au moins un chariot (20).

7. Installation selon la revendication 6, **caractérisée en ce qu'**elle comprend un convoyeur à chaînes (16) disposé en porte-à-faux à l'extrémité dudit convoyeur (13) ; lesdites chaînes pouvant être insérées entre lesdites premières dents (23).

8. Installation selon l'une des revendications précédentes, **caractérisée en ce qu'**elle comprend deux chariots mobiles (20).

9. Installation selon l'une des revendications précédentes, **caractérisée en ce qu'**elle comprend une base (30) supportant ledit guide (31) ; ladite base étant mobile dans ladite première direction.

10. Installation selon l'une des revendications précédentes, **caractérisée en ce que** la largeur dudit appareil de saisie (44) est sensiblement égale à la largeur desdits deux chariots (20).

11. Installation selon l'une des revendications précédentes, **caractérisée en ce que** ledit guide (31) est placé sur deux supports (33) à l'avant et est fixé au moyen d'une broche (35) sur deux supports arrière (34).

12. Procédé pour le chargement automatique d'un conteneur avec des palettes de sacs comprenant les étapes consistant à : délivrer des palettes de sacs sur au moins un chariot mobile (20) dans une première direction ; ledit chariot mobile (20) ayant une pluralité de premières dents (23) disposées en porte-à-faux ; placer un guide (31) aligné avec ledit conteneur (12) ; une poutre (32) pouvant coulisser à l'intérieur dudit guide (31) dans une seconde direction perpendiculaire à ladite première direction ; agencer un appareil de saisie (44), ayant des secondes dents (48), associé à une extrémité de ladite poutre (32) ; lesdites secondes dents (48) pouvant être insérées entre lesdites premières dents (23) ; déplacer ledit chariot mobile (20) d'une première position permettant de recevoir lesdites palettes de sacs sur lesdites premières dents (23) jusqu'à une seconde position dans laquelle lesdites premières dents sont situées au-dessus dudit appareil de saisie (44) ; déplacer verticalement ledit appareil de saisie (44) ; déplacer longitudinalement ladite poutre (32) afin qu'elle entre à l'intérieur dudit conteneur (12).

13. Procédé selon la revendication précédente, **caractérisé en ce qu'**il comprend en outre l'étape consistant à lever un système de support (50) de ladite poutre (32), placé à côté dudit conteneur (12), lorsque cette dernière entre à l'intérieur dudit conteneur (12).
